# FASCICULE DE BREVET EUROPEEN

(11) **EP 4 046 271 B1**
(45) Date de publication et mention de la délivrance du brevet: **24.06.2026**
(21) Numéro de dépôt: 20789187.0
(22) Date de dépôt: 15.10.2020
(51) Int. Cl.: H02S 20/25, E04D 1/30, E04D 1/00, E04D 1/34, E04D 12/00, E04D 1/20

(54) **TUILE PHOTOVOLTAIQUE PLATE, PROCÉDEÉ DE POSE ET COUVERTURE OBTENUE**
FLACHE FOTOVOLTAISCHE FLIESE, INSTALLATIONSVERFAHREN UND ERZIELTE ABDECKUNG
FLAT PHOTOVOLTAIC TILE, INSTALLATION METHOD AND COVERING OBTAINED

(30) Priorité: 18.10.2019 FR 1911718
(43) Date de publication de la demande: 24.08.2022
(73) Titulaire: Onduline, 92150 Suresnes (FR)
(72) Inventeur: XIAO, Jun, Beijing 100045 (CN); LIU, Junfeng, Beijing 101101 (CN)
(74) Mandataire: Jacobacci & Partners France
(86) Numéro de dépôt international: PCT/EP2020/079123
(87) Numéro de publication internationale: WO 2021/074339

(56) Documents cités:
- EP-A1- 2 262 003
- EP-A1- 2 442 371
- WO-A1-2011/048565
- WO-A1-2016/099994
- BE-A- 498 721
- CN-U- 201 771 114
- CN-U- 202 672 520
- FR-A1- 2 755 712
- FR-A1- 2 942 253
- FR-A1- 2 979 753
- FR-A1- 3 001 480
- JP-A- 2003 161 003
- US-A1- 2014 000 709

## Description

### Domaine technique

La présente invention concerne de manière générale le domaine des éléments de couverture de bâtiments et plus particulièrement une tuile photovoltaïque plate ainsi qu'un procédé de pose et la couverture obtenue. Elle a des applications dans le domaine de la construction et de la rénovation des toitures de bâtiments.

### Arrière-plan technologique

Les toitures en pente exposées au rayonnement solaire sont des supports intéressants pour les dispositifs de production d'électricité photovoltaïque. Classiquement, on installe ces dispositifs de production sur des supports fixés à la toiture qui comporte une couverture, typiquement de tuiles, plaques ondulées ou équivalents.

Il a été proposé d'utiliser des tuiles qui comportent des dispositifs de production d'électricité par exemple dans les documents WO 2000/30184, CN103485491A, CN201771114U, CN201756769U, CN201756768U ou CN101922212A.

On connait également les documents suivants divulguant divers types de tuiles photovoltaïques et accessoires concernant des toitures : WO 2011/048565 A1, WO 2016/099994 A1, EP 2 262 003 A1, FR 2 979 753 A1, FR 2 755 712 A1, US 2014/000709 A1, JP 2003 161003 A, CN 202 672 520 U et CN 201 771 114 U.

Ce type de tuile peut poser divers problèmes et notamment d'étanchéité, de difficulté de pose, de surchauffe, de câblage...

La présente invention propose une nouvelle solution qui peut faciliter la pose et le câblage des tuiles et qui peut éviter les risques de surchauffe.

### Exposé de l'invention

On propose donc selon l'invention, une tuile photovoltaïque plate selon la revendication 1.

D'autres caractéristiques non limitatives et avantageuses de la tuile photovoltaïque conforme à l'invention, prises individuellement ou selon toutes les combinaisons techniquement possibles, sont les suivantes :
- la partie amont d'une tuile est recouverte par une partie aval d'une autre tuile lorsque les tuiles sont alignées le long de la ligne de pente du toit,
- la partie amont d'une tuile est recouverte par des parties avals de deux autres tuiles lorsque les tuiles sont décalées le long de la ligne de pente du toit,
- la couche transparente en verre trempé n'est étendue que sur l'élément photovoltaïque,
- les parties latérales venant en recouvrement de deux tuiles sont complémentaires afin d'assurer une étanchéité au moins à l'eau liquide s'écoulant sur la toiture,
- les parties latérales complémentaires venant en recouvrement comportent pour l'une une gorge et pour l'autre une contre-gorge,
- les parties latérales complémentaires venant en recouvrement comportent pour l'une une gorge et pour l'autre une contre-gorge, au moins une de la gorge et de la contre-gorge comportant un joint souple,
- dans les parties latérales complémentaires venant en recouvrement, la gorge et la contre-gorge sont en vis-à-vis,
- dans les parties latérales complémentaires venant en recouvrement, la gorge et la contre-gorge sont décalées,
- les parties latérales droite et gauche complémentaires venant en recouvrement comportent pour l'une une gorge et pour l'autre une ligne saillante,
- les parties latérales droite et gauche complémentaires venant en recouvrement comportent pour l'une une gorge et pour l'autre une ligne saillante, au moins une de la gorge et de la ligne saillante comportant un joint souple,
- dans les parties latérales droite et gauche complémentaires venant en recouvrement, la gorge et la ligne saillante sont en vis-à-vis, la ligne saillante et son éventuel joint s'insérant dans la gorge,
- la partie amont et la partie aval venant en recouvrement de deux tuiles sont complémentaires afin d'assurer une étanchéité au moins à l'eau liquide s'écoulant sur la toiture,
- les parties amont et aval complémentaires venant en recouvrement comportent pour l'une, une gorge, et pour l'autre, une contre-gorge, au moins une de la gorge et de la contre-gorge comportant un joint souple,
- dans les parties amont et aval complémentaires venant en recouvrement, la gorge et la contre-gorge sont en vis-à-vis,
- dans les parties amont et aval complémentaires, la gorge et la contre-gorge sont décalées,
- les parties amont et aval complémentaires venant en recouvrement comportent pour l'une, une gorge, et pour l'autre, une ligne saillante, au moins une de la gorge et de la ligne saillante comportant un joint souple,
- dans les parties amont et aval complémentaires venant en recouvrement, la gorge et la ligne saillante sont en vis-à-vis,
- de préférence, la face avant de la tuile photovoltaïque comporte une gorge sur la partie amont recouverte et le long du bord latéral recouvert,
- le joint souple de gorge ou de ligne saillante est débordant pour s'insérer dans la gorge en vis-à-vis lors du recouvrement,
- lorsque les deux gorges comportent chacune un joint souple, les deux joints s'appliquent l'un contre l'autre lors du recouvrement,
- lorsque la gorge et la ligne saillante comportent chacune un joint souple, les deux joints s'appliquent l'un contre l'autre lors du recouvrement,
- de préférence, sur la face avant de la tuile photovoltaïque, la gorge sur la partie amont recouverte et la gorge le long du bord latéral recouvert communiquent entre elles afin de permettre un écoulement vers le bas de la pente de la toiture d'éventuelle eau liquide dans la gorge,
- de préférence, sur la face avant de la tuile photovoltaïque, l'extrémité basse de la gorge le long du bord latéral est ouverte afin de permettre un écoulement sur a tuile aval, vers le bas de la pente de la toiture, d'éventuelle eau liquide dans la gorge,
- la partie amont comporte des trous de passage destinés au passage d'éléments de fixation pour fixer la tuile à la toiture,
- les trous de passage sont sensiblement perpendiculaires au plan général de la tuile,
- les éléments de fixation sont notamment des pointes, clous ou vis,
- le dispositif de retenue est une plaque ondulée présentant des zones en creux dans la partie convexe de ses ondulations,
- les zones en creux sont alignées,
- les zones en creux du dispositif de retenue permettent de retenir les tuiles par leurs tenons,
- la partie amont de la tuile photovoltaïque comporte des trous de passage pour fixation de la tuile par notamment des pointes, clous ou vis à un élément de la charpente du toit et en traversant la plaque ondulée, lorsque la tuile est retenue sur la plaque ondulée par ledit au moins un tenon,
- le dispositif de retenue est un liteau ou volige, ces deux termes étant considérés équivalents dans le contexte de l'invention,
- le liteau est une baguette en bois brut,
- le liteau est une baguette moulée en matière plastique,
- la partie amont de la tuile photovoltaïque comporte des trous de passage pour fixation des tuiles au liteau par notamment des pointes, clous ou vis, lorsque la tuile est retenue sur ledit liteau par ledit au moins un tenon,
- le verre trempé est optiquement structuré à sa surface côté élément photovoltaïque,
- le verre trempé est coloré dans la masse,
- la face arrière de la tuile photovoltaïque comporte une paire de tenons,
- le film inférieur d'Ethylène Vinyle Acétate est réuni au film supérieur d'Ethylène Vinyle Acétate,
- le film inférieur d'Ethylène Vinyle Acétate est réuni au film supérieur d'Ethylène Vinyle Acétate le long du pourtour de l'élément photovoltaïque,
- le film inférieur d'Ethylène Vinyle Acétate est soudé au film supérieur d'Ethylène Vinyle Acétate,
- le film inférieur d'Ethylène Vinyle Acétate est collé au film supérieur d'Ethylène Vinyle Acétate,
- le film d'éthylène Vinyle Acétate est créé directement autour de la plaque à base de silicium par déposition de l'éthylène Vinyle Acétate,
- la plaque à base de silicium est encapsulée dans le film d'Ethylène Vinyle Acétate sous vide d'air,
- la plaque est à base de silicium monocristallin,
- la plaque est à base de silicium polycristallin,
- la tuile photovoltaïque plate comporte deux éléments photovoltaïques ayant chacun son moyen de raccordement électrique,
- la tuile photovoltaïque plate comporte trois éléments photovoltaïques ayant chacun son moyen de raccordement électrique,
- la tuile photovoltaïque plate comporte un ou plusieurs éléments photovoltaïques ayant chacun son moyen de raccordement électrique,
- la tuile photovoltaïque plate comporte deux éléments photovoltaïques ayant un seul moyen de raccordement électrique, les éléments photovoltaïques étant reliés électriquement au sein de la tuile,
- la tuile photovoltaïque plate comporte trois éléments photovoltaïques ayant un seul moyen de raccordement électrique, les éléments photovoltaïques étant reliés électriquement au sein de la tuile,
- la tuile photovoltaïque plate comporte un ou plusieurs éléments photovoltaïques ayant un seul moyen de raccordement électrique, les éléments photovoltaïques étant reliés électriquement au sein de la tuile,
- les éléments photovoltaïques reliés électriquement au sein de la tuile le sont en série,
- les éléments photovoltaïques reliés électriquement au sein de la tuile le sont en parallèle,
- les éléments photovoltaïques reliés électriquement au sein de la tuile le sont en parallèle et en série selon les éléments photovoltaïques,
- l'élément photovoltaïque est constitué d'une unité de production photovoltaïque comportant au moins deux plaques à base de silicium de conversion photovoltaïque, l'élément photovoltaïque comportant un seul panneau arrière commun aux plaques à base de silicium, un seul film inférieur d'Ethylène Vinyle Acétate commun aux plaques à base de silicium, un seul film supérieur d'Ethylène Vinyle Acétate commun aux plaques à base de silicium et une seule couche transparente commune aux plaques à base de silicium, l'unité de production n'ayant qu'un seul moyen de raccordement électrique commun aux plaques à base de silicium, les plaques à base de silicium étant connectées électriquement au sein de la tuile,
- l'unité de production photovoltaïque comporte deux plaques à base de silicium,
- l'unité de production photovoltaïque comporte trois plaques à base de silicium,
- les plaques à base de silicium reliées électriquement au sein de la tuile le sont en série,
- les plaques à base de silicium reliées électriquement au sein de la tuile le sont en parallèle,
- les plaques à base de silicium reliées électriquement au sein de la tuile le sont en parallèle et en série selon les éléments photovoltaïques,
- le logement dans l'épaisseur de la coque comporte un fond plat et le fond plat du logement comporte une ouverture de passage pour le moyen de raccordement électrique disposé côté arrière de l'élément photovoltaïque,
- la coque comporte à la face arrière de la tuile des nervures de renfort,
- les nervures sont parallèles aux bords latéraux,
- les nervures sont parallèles aux bords amont et aval,
- les nervures sont obliques aux bords latéraux et amont et aval,
- ladite au moins une patte déborde vers l'arrière du gabarit général plan de la face arrière,
- ledit au moins un orifice et ladite au moins une patte ont des formes complémentaires comportant des moyens de verrouillage entre elles,
- les moyens de verrouillage sont à clipsage,
- la tuile est d'épaisseur sensiblement uniforme, ladite épaisseur étant comprise entre 30 mm et 15 mm et étant de préférence d'environ 20 mm,
- l'épaisseur sensiblement uniforme est considérée en dehors du/des tenons et de la/des éventuelles pattes,
- la tuile est de forme rectangulaire,
- la largeur de recouvrement des tuiles côté bords amonts et avals est comprise entre 60 mm et 90 mm,
- de préférence, la largeur de recouvrement des tuiles côté bords amonts et avals est comprise entre 68 mm et 88 mm ou est comprise entre 74 mm et 81,5 mm,
- en particulier, la largeur de recouvrement des tuiles côté bords amonts et avals est d'environ 78 mm,
- la largeur de recouvrement des tuiles côté bords latéraux droits et gauches est comprise entre 10 mm et 35 mm,
- de préférence, la largeur de recouvrement des tuiles côté bords latéraux droits et gauches est d'environ 11 mm ou d'environ 30 mm,
- le bord amont et le bord aval de la tuile ont chacun une longueur identique comprise entre 380 mm et 260 mm,
- de préférence, le bord amont et le bord aval de la tuile ont chacun une longueur identique comprise entre 365 mm et 360 mm,
- en particulier, le bord amont et le bord aval de la tuile ont chacun une longueur identique d'environ 355 mm ou d'environ 374 mm,
- le bord amont et le bord aval de la tuile ont chacun une longueur identique comprise entre 1000 mm et 1100 mm,
- de préférence, le bord amont et le bord aval de la tuile ont chacun une longueur identique comprise entre 1053 mm et 1048 mm,
- en particulier, le bord amont et le bord aval de la tuile ont chacun une longueur identique d'environ 1043 mm ou d'environ 1062 mm,
- chaque bord latéral de la tuile a une longueur identique comprise entre 480 mm et 380 mm et qui est de préférence d'environ 440 mm,
- la couche transparente a une épaisseur comprise entre 4 mm et 2 mm et qui est de préférence d'environ 3,2 mm,
- la matière plastique de la coque a une épaisseur minimale en tout point comprise entre 4 mm et 2 mm et qui est de préférence d'environ 3 mm, ladite épaisseur minimale étant considérée selon une direction perpendiculaire au plan général de la tuile,
- le panneau arrière a une épaisseur comprise entre 0,4 mm et 0,2 mm et qui est de préférence d'environ 0,35 mm,
- l'élément photovoltaïque a une épaisseur d'environ 4,5 mm,
- chaque film d'Ethylène Vinyle Acétate a une épaisseur comprise entre 0,8 mm et 0,2 mm et qui est de préférence d'environ 0,5 mm,
- la matière plastique de la coque est choisie parmi : ABS, PA-6, PA-6,6, PE-HD, PE-LD, PET amorphe, PET cristallin, PMMA, PP, PS « cristal », PVC rigide,
- la matière plastique de la coque est du Polycarbonate comportant des fibres de verre, un opacifiant, et un retardateur de flamme,
- la matière plastique de la coque est de préférence de l'Oxyde de Polyphénylène (PPO, polyphenylene oxide) comportant des fibres de verre et un retardateur de flamme,
- la matière plastique de la coque est de préférence traitée anti-UV (anti-ultraviolet),
- les fibres de verre et le retardateur de flamme sont dosées de 5% à 10% en poids dans le PPO,
- le moyen de raccordement électrique est constitué de deux câbles électriques flexibles sortants de la face arrière de la tuile,
- le moyen de raccordement électrique comporte les deux trous de passage rendus conducteurs et formant des parties femelles,
- les deux trous de passage rendus conducteurs et formant des parties femelles du moyen de raccordement électrique sont des connecteurs spéciaux, de préférence présentant des propriétés similaires aux connecteurs MC4,
- inversement, les deux trous de passage sont remplacés par deux broches étendues vers l'arrière et compatibles avec un liteau ayant deux trous de réception de connexion pour lesdites broches,
- dans le cas où le moyen de raccordement électrique est constitué de deux trous de passage rendus conducteurs ou sont deux broches alors un des trous ou broches est de polarité positive et l'autre est de polarité négative,
- dans le cas où le moyen de raccordement électrique comporte les deux trous de passage, l'extrémité supérieure de chaque trou est fermée par un opercule pouvant céder ou qui est amovible,
- le moyen de raccordement électrique est constitué de deux connecteurs (+ et -) disposés à la face arrière de la tuile,
- le moyen de raccordement électrique est constitué de deux connecteurs (+ et -) disposés à la face arrière du panneau arrière,
- le moyen de raccordement électrique comporte des connecteurs type MC4 ou compatibles.

L'invention concerne également un procédé de pose de tuiles photovoltaïques selon la revendication 11. De préférence, on relie entre eux les moyens de raccordement électrique des tuiles avant la fixation des tuiles.

L'invention concerne enfin une couverture de toiture comportant une juxtaposition d'un ensemble de tuiles photovoltaïques plates selon l'invention, la couverture comportant des liteaux et(en combinaison)/ou(en alternative) des plaques ondulées présentant des zones en creux dans la partie convexe de leurs ondulations.

### Brève description des dessins

**[****Fig. 1****]** représente une vue frontale de dessus d'une tuile photovoltaïque comportant une seule unité de production photovoltaïque,
**[****Fig. 2****]** représente une vue latérale côté bord latéral droit de la tuile photovoltaïque de la figure 1,
**[****Fig. 3****]** représente une vue du côté du bord amont de la tuile photovoltaïque de la figure 1,
**[****Fig. 4****]** représente une vue en coupe transversale selon la ligne E-E de la tuile photovoltaïque de la figure 1,
**[****Fig. 5****]** représente une vue frontale de dessus d'une tuile photovoltaïque comportant trois unités de production photovoltaïque,
**[****Fig. 6****]** représente une vue latérale côté bord latéral droit de la tuile photovoltaïque de la figure 5,
**[****Fig. 7****]** représente une vue du côté du bord amont de la tuile photovoltaïque de la figure 5,
**[****Fig. 8****]** représente une vue en coupe transversale selon la ligne E-E de la tuile photovoltaïque de la figure 5,
**[****Fig. 9****]** représente une vue en perspective d'une plaque ondulée de sous-toiture destinée à supporter les tuiles photovoltaïques sur une charpente de toiture,
**[****Fig. 10****]** représente un agrandissement d'une partie de la plaque ondulée de sous-toiture de la figure 9, partie comportant une zone en creux,
**[****Fig. 11****]** représente une vue en coupe d'une toiture en pente sur laquelle ont été installées une plaque ondulée de sous-toiture supportant des tuiles
   photovoltaïques,
**[****Fig. 12****]** représente une vue en coupe d'une toiture en pente sur laquelle ont été installées des tuiles photovoltaïques sur liteaux,
**[****Fig. 13****]** représente une vue arrière d'une tuile photovoltaïque du type de celle de la figure 1,
**[****Fig. 14****]** représente une vue arrière d'une tuile photovoltaïque du type de celle de la figure 5,
**[****Fig. 15****]** représente une vue arrière de la coque d'une tuile photovoltaïque ouverte sur l'arrière,
**[****Fig. 16****]** représente une vue avant de la coque de la tuile photovoltaïque de la figure 15,
**[****Fig. 17****]** représente une vue avant d'une partie de couvertures avec des tuiles photovoltaïques utilisant deux types d'éléments photovoltaïques tout comme la suivante,
**[****Fig. 18****]** représente une vue avant d'une partie de couvertures avec des tuiles photovoltaïques utilisant deux types d'éléments photovoltaïques,
**[****Fig. 19****]** représente une vue avant de tuiles photovoltaïques à recouvrement latéral augmenté tout comme la suivante,
**[****Fig. 20****]** représente une vue avant de tuiles photovoltaïques à recouvrement latéral augmenté,
**[****Fig. 21****]** représente une vue en coupe transversale selon la ligne E-E de la tuile photovoltaïque de la figure 19,
**[****Fig. 22****]** représente une vue en coupe transversale, côté latéral gauche de la tuile, au niveau d'un crampon ou crochet 9 de retenue de la tuile.

### Description détaillée d'un exemple de réalisation

La description qui va suivre en regard des dessins annexés, donnés à titre d'exemples non limitatifs, fera bien comprendre en quoi consiste l'invention et comment elle peut être réalisée.

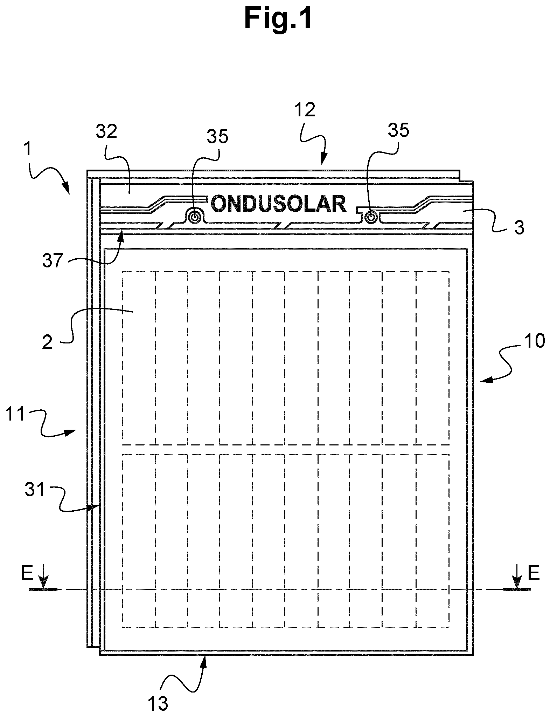

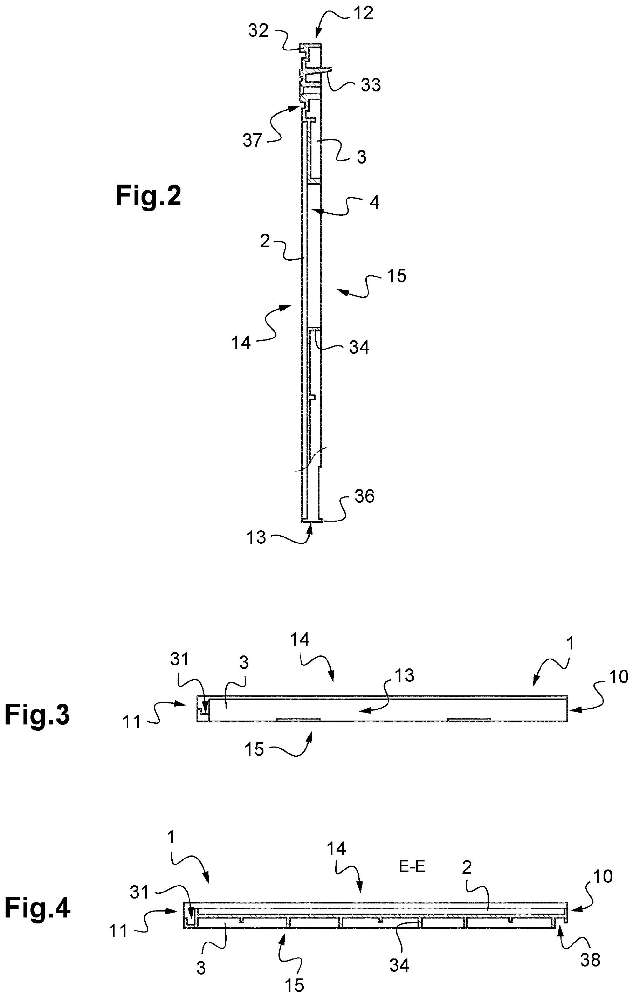

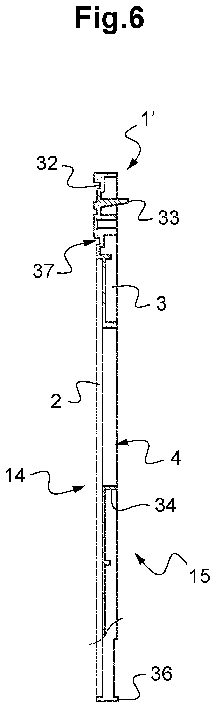

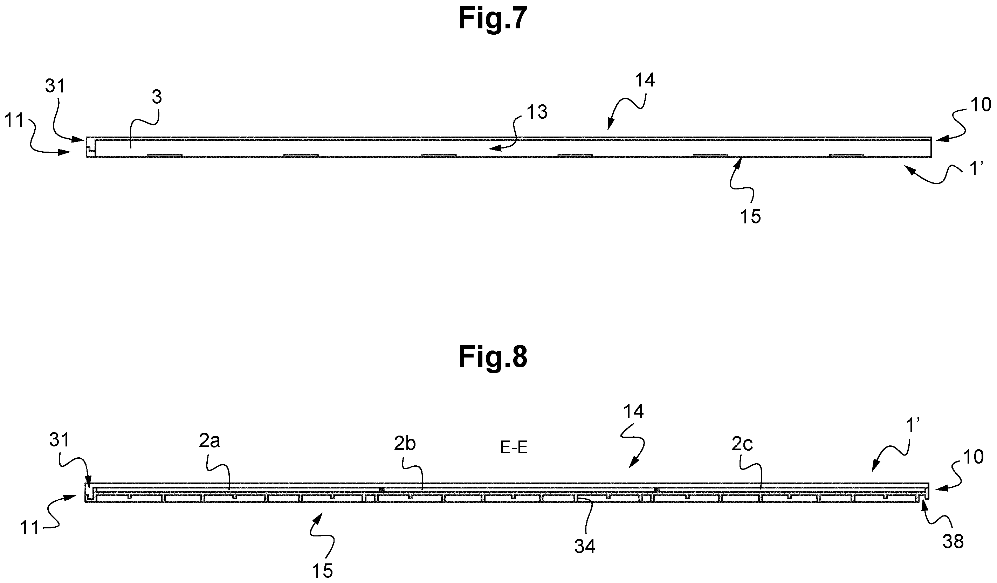

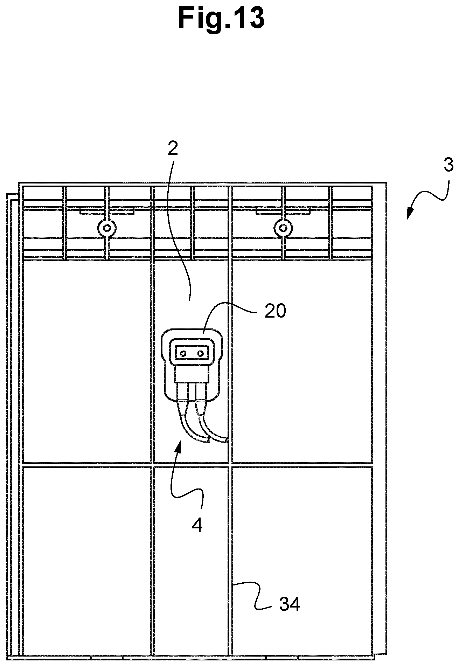

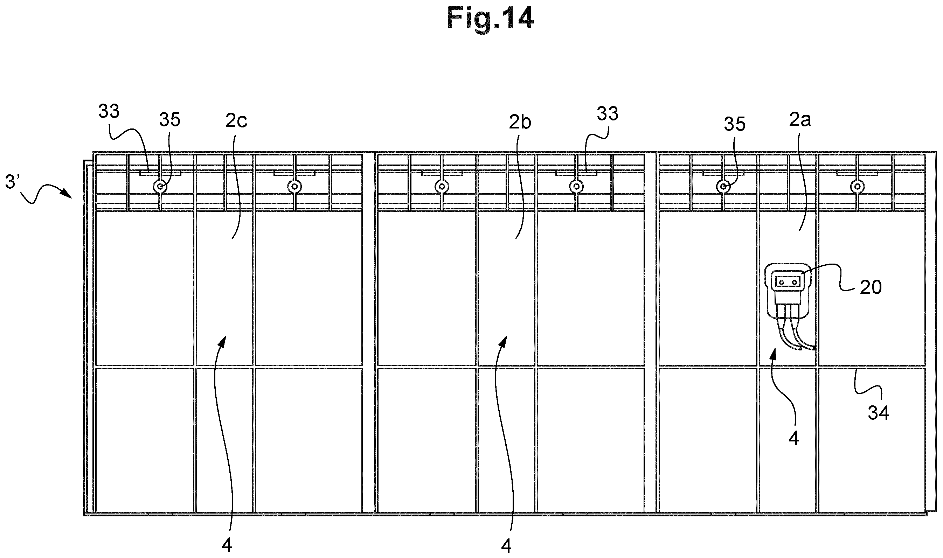

La tuile photovoltaïque 1, 1' est un élément carré ou, comme sur les figures 1 à 8 et 13 à 16, rectangulaire. La tuile photovoltaïque 1, 1' comporte une face avant 14 et une face arrière 15, deux bords latéraux droit 10 et gauche 11 opposées et parallèles entre eux, un bord amont 12 et un bord aval 13 opposées et parallèles entre eux. La tuile photovoltaïque 1, 1' est plane et elle définit un gabarit général plan tout comme ses deux faces à l'exception d'au moins un tenon 33 qui dépasse du plan général de la face arrière 15 et d'un moyen de raccordement électrique 20 comportant deux câbles électriques de raccordement flexibles (figures 13 et 14), un positif et un négatif et avec des connecteurs de type MC4. En particulier, la face avant 14 est essentiellement plane afin de faciliter le nettoyage périodique des tuiles et d'éviter que des détritus puissent être retenus. En particulier l'espace entre les deux bords latéraux de deux tuiles adjacentes latéralement (= d'un même rang, les tuiles venant en chevauchement de parties latérales le long des bords latéraux) est réduit au minimum et peut même éventuellement être comblé par une pâte d'étanchéité, par exemple silicone, qui est arasée/mise de niveau avec la face avant 14.

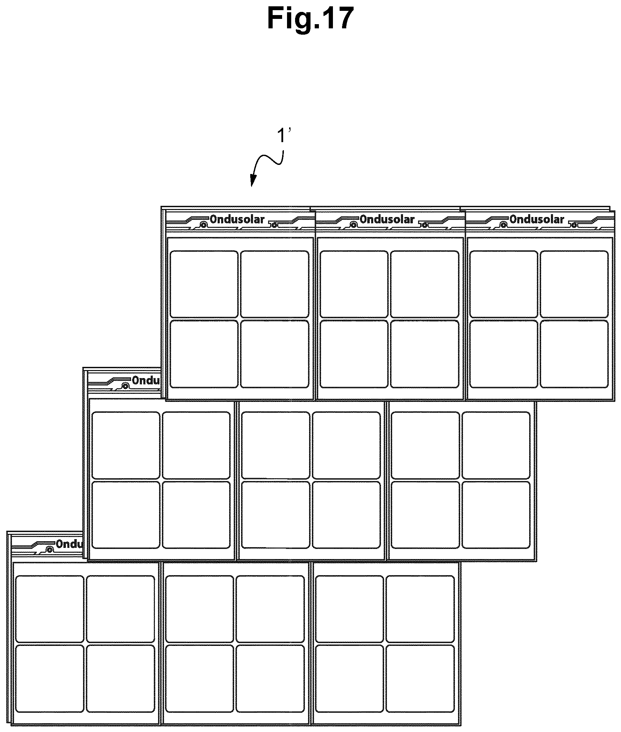

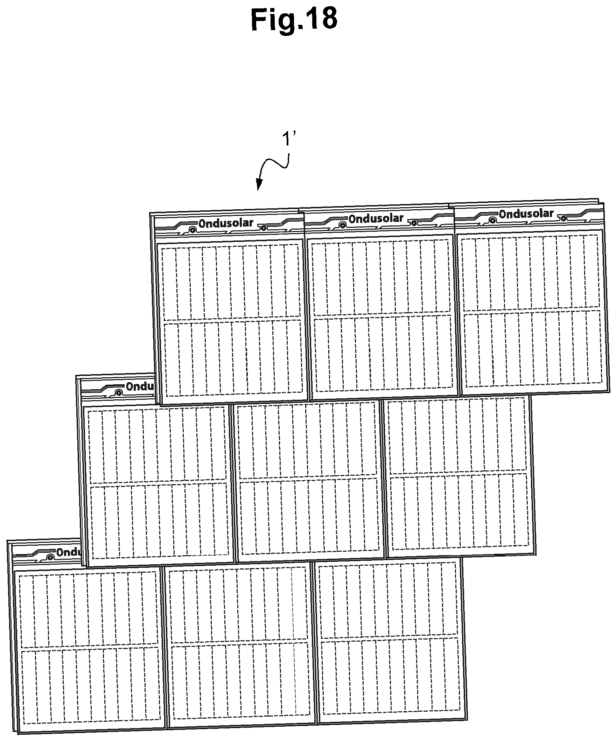

La tuile photovoltaïque 1, 1' est destinée à être installée sur une toiture en pente et son bord amont 12 est installé plus haut que son bond aval 13 le long de la pente. Sur la toiture, les tuiles photovoltaïques 1, 1' sont classiquement installées en rangs parallèles, chaque rang étant aligné sur une ligne horizontale ou à tout le moins parallèle à la ligne de faîte du toit. Du fait de leur forme les tuiles photovoltaïques 1, 1' peuvent être alignées en lignes parallèles le long de la pente de la toiture (c.-à-d. perpendiculaire aux rangs) ou être, de préférence, décalées comme représenté figures 17 et 18. La face avant 14 de la tuile photovoltaïque 1, 1' est orientée vers le ciel sur la toiture car elle est destinée à recevoir un rayonnement solaire.

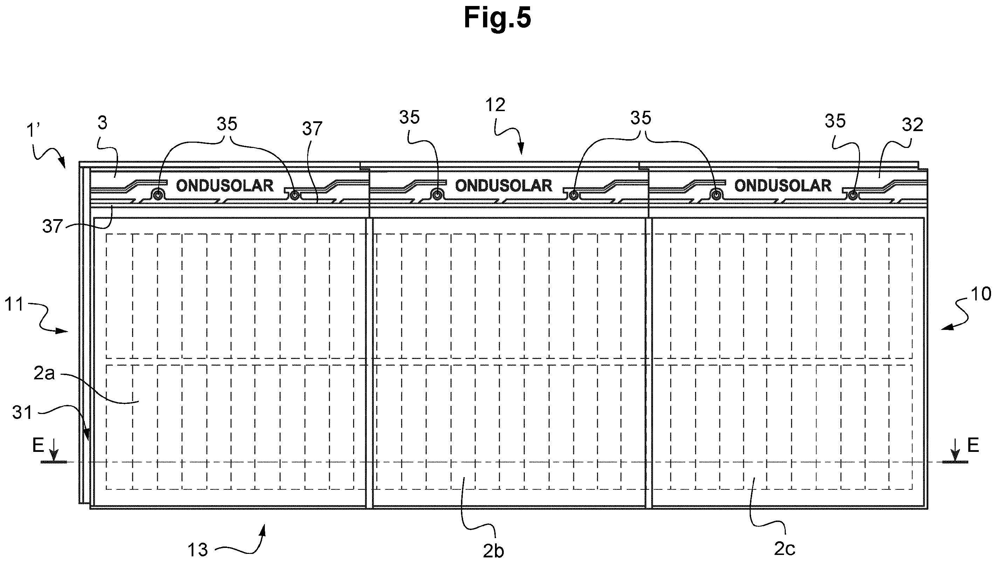

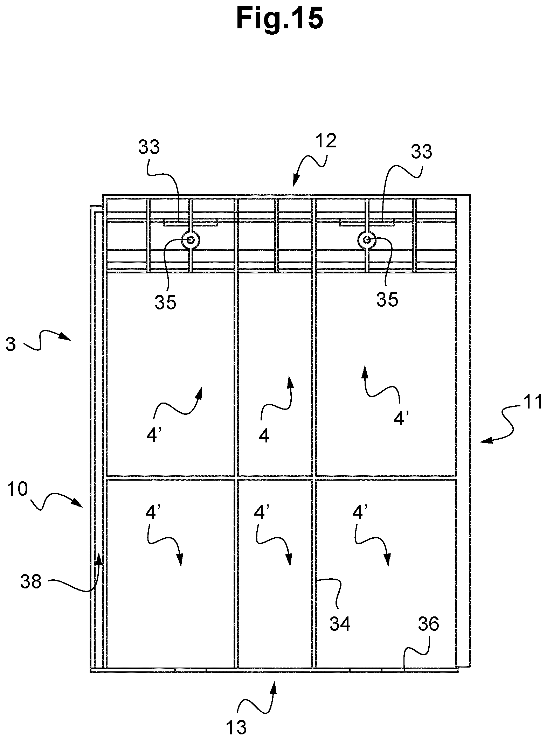

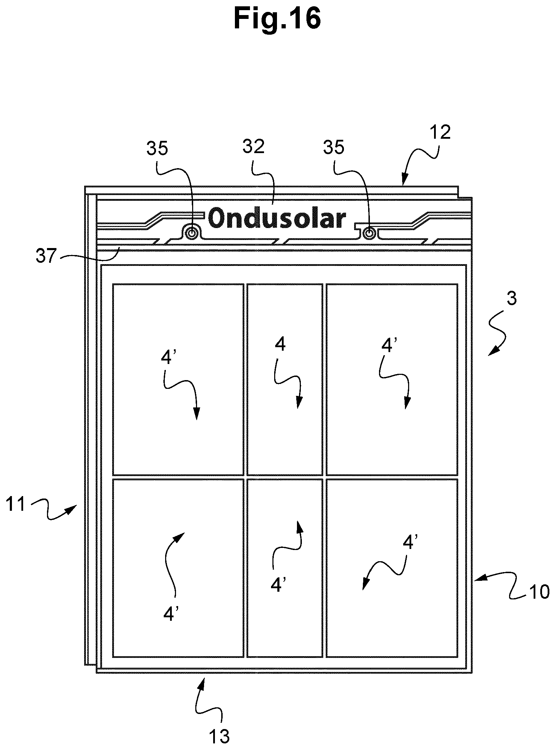

La tuile photovoltaïque 1, 1' est constituée d'une coque 3 en matière plastique rigide et d'un élément photovoltaïque comportant une unité 2 (figures 1 à 4) ou plusieurs 2a, 2b, 2c (trois figures 5 à 8) unités de production d'électricité photovoltaïque. Des nervures 34 sont agencées à la face arrière de la coque 3 afin de renforcer la tuile photovoltaïque 1, 1'. On peut voir plus précisément un exemple de coque 3 sur les figures 15 et 16 et cette coque est utilisable pour une tuile photovoltaïque à élément photovoltaïque à une unité de production d'électricité. A noter que la face arrière de la coque 3 peut être essentiellement fermée sauf une ouverture 4 pour permettre des raccordements électriques (notamment figures 1 à 8) ou essentiellement ouverte (figures 15 et 16). Une face arrière ouverte avec des passages 4' comme sur les figures 15 et 16 présente l'avantage de faciliter la convexion thermique autour de l'élément photovoltaïque.

L'élément photovoltaïque est fixé dans l'épaisseur de la coque 3 de préférence par collage, ce qui permet aussi d'assurer une étanchéité entre les deux faces de la tuile. La coque 3 comporte un côté face arrière 15, une ouverture 4 donnant accès à la face arrière de l'élément photovoltaïque 2, 2a, 2b, 2c pour accès au moyen de raccordement 20 et passage des deux câbles électriques de raccordement.

La matière plastique de la coque est une matière plastique résistant aux intempéries, rayonnement solaire et plus généralement à l'environnement extérieur d'une habitation.

La matière plastique de la coque 3 est de l'Oxyde de Polyphénylène (PPO) comportant des fibres de verre et un retardateur de flamme. La matière plastique de la coque comporte de préférence au moins un pigment.

La tuile photovoltaïque 1, 1' comporte des parties qui sont recouvertes et d'autres qui viennent en recouvrement, par chevauchement, de tuiles adjacentes dans la toiture constituée de l'assemblage des tuiles photovoltaïques 1, 1' afin d'assurer notamment l'étanchéité à l'eau liquide.

Côté du bord amont 12, une partie amont 32 de la face avant 14 de la tuile photovoltaïque 1, 1' est destinée à être recouverte par une partie aval de la tuile photovoltaïque 1, 1' du rang supérieur le long de la pente de la toiture. Cette partie amont 32 est constituée de la seule coque 3, l'élément photovoltaïque ne s'y étendant pas étant donné l'absence de rayonnement solaire dans cette partie amont 32. Cette partie amont comporte des trous de passage 35 pour fixation des tuiles à un liteau 8, notamment par points, clous ou vis. Le/les tenons 33 sont disposés côté face arrière 15 au niveau de la partie amont 32 et un peu plus hauts, dans le sens de la pente, que les trous de passage 35. En d'autres termes, le/les tenons 33 sont plus proches du bord amont 12 que les trous de passage 35.

Dans une variante de réalisation, les liteaux sont préfabriqués et comportent des broches érigées vers le haut et dont l'écartement correspond à l'écartement des deux trous de passage de la tuile. Les broches des liteaux constituent ainsi des éléments de fixation préinstallés sur les dispositifs de retenue à types de liteaux. Ces broches peuvent comporter des moyens de clipsage dans les trous de passage.

De manière encore plus avantageuse, ces broches sont conductrices de l'électricité formant un connecteur mâle et les trous de passage sont aussi conducteurs de l'électricité et forment des connecteurs femelles reliés à l'élément photovoltaïque ou à chaque unité de production d'électricité permettant ainsi un raccordement électrique automatique. Dans une telle variante de réalisation, les liteaux comportent de préférence des circuits électriques permettant un câblage adapté aux besoins, notamment série et/ou parallèles entre les tuiles ou sous-ensembles de tuiles. Le courant et la tension produits par les tuiles photovoltaïques étant un courant continu, il suffit de deux connexions par tuile, un pôle positif et un pôle négatif. Ainsi, les liteaux peuvent former des bus de circulation du courant produit et, selon les cas, former des adaptateurs série entre tuiles et/ou parallèle sur bus.

Inversement, pour le raccordement électrique automatique, les liteaux peuvent comporter trous de réception de connexion pour des paires de broches conductrices de chaque tuile, ces broches étant étendues vers l'arrière de la tuile et s'insérant dans les trous de réception. Dans une autre variante de raccordement électrique automatique, à la fois les liteaux et les tuiles comportent des trous de passage conducteurs et on installe des clous ou vis, les trous étant taraudés, ou broches de connexion électrique entre les deux permettant à la fois la fixation des tuiles sur les liteaux et les connexions électriques entre tuiles et liteaux formant des bus de circulation de courant.

En limite entre la partie amont 32 et la partie de la coque comportant l'élément photovoltaïque, une gorge amont 37 est agencée sur la face avant 14 et qui est destinée à recevoir une ligne saillante aval 36, saillante vers l'arrière, qui se trouve le long du bord aval 13 à la face arrière 15 de la tuile photovoltaïque 1, 1'. Eventuellement, une pâte d'étanchéité, par exemple silicone, peut-être injectée dans la gorge amont 37 lors de la pose des tuiles. Dans une variante de mise en œuvre, un joint souple (= compressible) est installé dans la gorge amont 37. Dans une variante de mise en œuvre, un joint souple est installé chevauchant la ligne saillante aval 36.

Toutefois, et de préférence, aucun élément supplémentaire n'est mis en œuvre pour assurer l'étanchéité entre les tuiles, le simple assemblage et ajustement des tuiles entre elles assurant cette étanchéité.

Dans une modalité de mise en œuvre, des moyens de clipsage sont prévus entre la face avant 14 dans la partie amont 32 et la face arrière 15 dans la partie aval qui viennent en recouvrement afin de maintenir serrées les deux tuiles chevauchantes/se recouvrant partiellement, le long de la pente.

Le long du bord latéral gauche 11, une partie latérale gauche de la face avant 14 de la tuile photovoltaïque 1, 1' est destinée à être recouverte par une partie latérale droite de la tuile photovoltaïque 1, 1' adjacente du même rang. Cette partie latérale gauche est constituée de la seule coque 3, l'élément photovoltaïque ne s'y étendant pas étant donné l'absence de rayonnement solaire dans cette partie latérale gauche. Cette partie latérale gauche comporte une gorge latérale gauche 31 parallèle au bord latéral gauche 11 et agencée sur la face avant 14. La gorge latérale gauche 31 est destinée à venir en vis-à-vis d'une contre-gorge latérale droite 38 côté face arrière 15 et agencée le long du bord latéral droit 10. Un joint souple (non représenté) est installé dans la gorge latérale gauche 31 et il est comprimé par la contre-gorge latérale droite 38 lors de l'installation des tuiles 1, 1'. Dans une variante, la gorge latérale gauche 31 comporte un joint souple et la contre-gorge latérale droite 38 comporte un autre joint souple et ce sont ces deux joints qui sont comprimés ensembles lors de l'installation des tuiles 1, 1'.

Dans une variante de réalisation, la gorge latérale gauche 31 est destinée à recevoir une ligne saillante latérale droite, saillante vers l'arrière, qui se trouve le long du bord latéral droit, à la face arrière 15 de la tuile photovoltaïque 1, 1' d'une manière similaire à ce qui est fait pour la gorge amont 37 et la ligne saillante aval 36. Eventuellement, dans cette dernière variante, une pâte d'étanchéité, par exemple silicone, peut-être injectée dans la gorge latérale gauche 31 lors de la pose des tuiles. Dans une variante de mise en œuvre, un joint souple est installé dans la gorge latérale 31. Dans une variante de mise en œuvre, un joint souple est installé chevauchant la ligne saillante latérale droite.

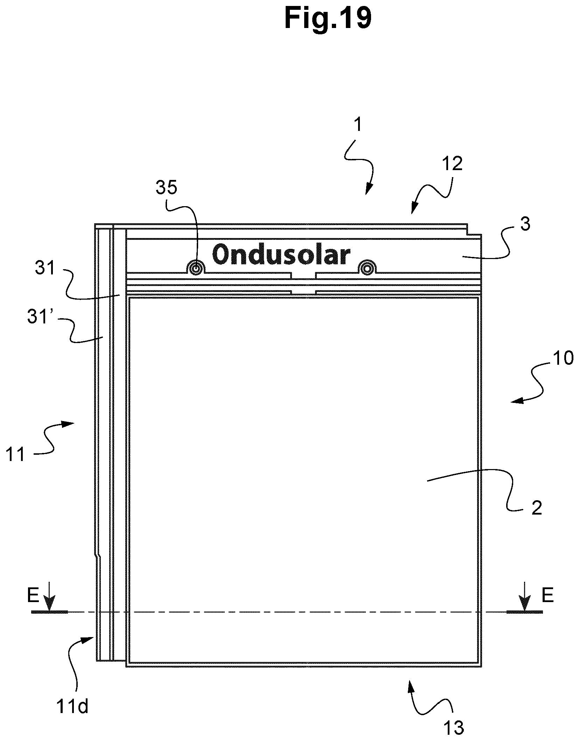

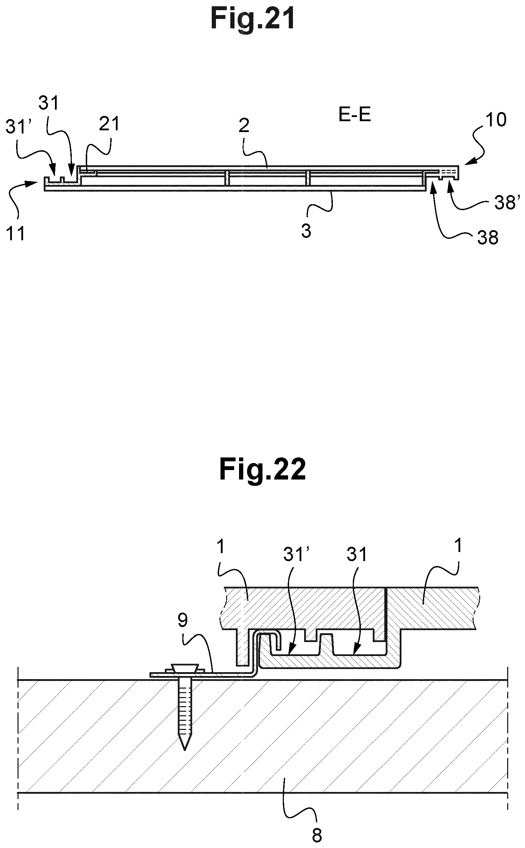

Afin de renforcer l'étanchéité entre les tuiles, notamment sur leurs côtés latéraux droits et gauches, on peut augmenter la largeur de recouvrement entre les bords chevauchants latéraux droits et gauches des tuiles photovoltaïques. On prévoit en outre, comme représenté figures 19, 20 et 21, de doubler les gorges latérales et contre-gorges latérales. Ainsi, figure 21, on peut voir deux gorges latérales gauches 31 et 31' et deux contre-gorges latérales droites 38 et 38'. Les deux gorges latérales 31 et 31' sont côte-à-côte et parallèles. Les deux contre-gorges latérales 38 et 38' sont côte-à-côte et parallèles. Les gorges et contre-gorges peuvent être inversées de côtés droit et gauche mais toutes les tuiles seront configurées identiquement concernant les gorges et contre-gorges afin que ces dernières puissent s'assembler en vis-à-vis et recouvrement.

Dans le cas de gorges simples, la largeur de recouvrement des tuiles côté bords latéraux droits et gauches est d'environ 11 mm. Dans le cas de gorges doubles, la largeur de recouvrement des tuiles côté bords latéraux droits et gauches est d'environ 30 mm.

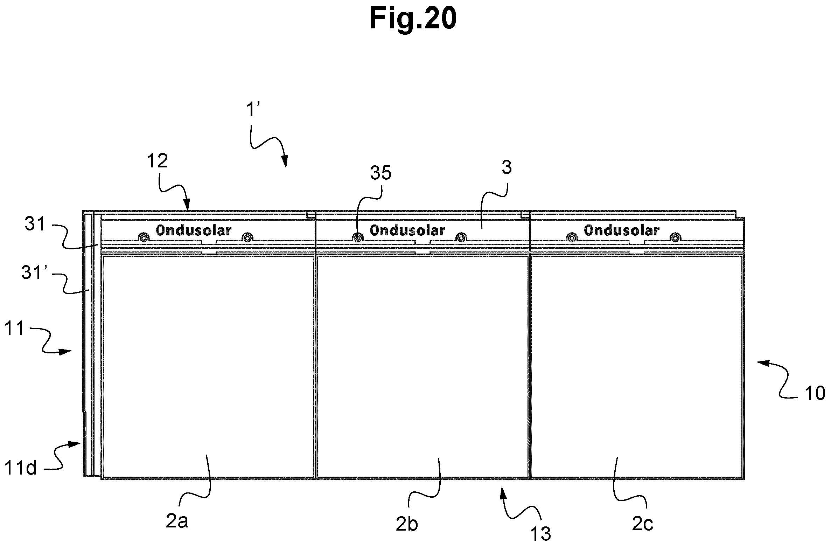

On peut noter sur les figures 19 et 20 où cela est mieux visible, que le côté latéral gauche 11 de la tuile comporte vers l'aval un décrochement 11d d'environ 1 mm. Ce décrochement 11d est destiné à permettre, si requis, l'installation d'un crampon ou crochet 9 de retenue de la tuile comme visible sur la figure 22. Ce crampon ou crochet est, d'une part, vissé ou cloué sur la charpente ou le liteau 8 et, d'autre part, vient s'accrocher sur la bordure de la tuile, côté latéral gauche. On comprend qu'il est prévu un décrochement adapté en correspondance à la face inférieure des tuiles du côté du bord latéral droit 10.

Dans une modalité de mise en œuvre, des moyens de clipsage sont prévus entre la face avant 14 et la face arrière 15 entre les bords latéraux droit et gauche de deux tuiles adjacentes d'un même rang.

On comprend que les qualificatifs droit et gauche sont indicatifs et que les gorges, contre-gorges et/ou lignes saillantes latérales peuvent être inversés de côté par rapport aux dessins. On comprend également que pour être compatibles à l'installation, les tuiles sont configurées identiquement en ce qui concerne ces gorges, contre-gorges et/ou lignes saillantes.

De préférence, on met en œuvre des gorges en amont et latéralement du côté de la face avant 14 et on s'assure que la gorge amont communique avec la gorge latérale et on prévoit que l'éventuelle eau d'une gorge latérale d'une tuile plus haute le long de la pente puisse passer sur la tuile adjacente juste plus bas, ceci afin de recueillir l'éventuelle eau liquide ayant pu passer dans la gorge et l'évacuer plus bas le long de la pente.

L'élément photovoltaïque est constitué de plusieurs parties assurant, outre la production d'électricité photovoltaïque, son étanchéité et sa résistance, notamment à l'abrasion côté face avant 14.

Pour la production d'électricité une plaque à base de silicium mono ou polycristallin est mise en œuvre. Cette plaque peut être monolithique ou résulter de l'assemblage de plusieurs circuits à base de silicium. La plaque à base de silicium est prise en sandwich/encapsulée entre deux films de matière plastique éthylène-acétate de vinyle (EVA) et une couche de verre trempé formant une couche transparente est positionnée contre le film de matière plastique éthylène-acétate de vinyle supérieur, donc du côté devant recevoir le rayonnement solaire. Il en résulte que la face avant de la tuile photovoltaïque est constituée de la couche de verre trempé dans la zone de production d'électricité et de la matière plastique de la coque en dehors de cette zone. La zone de production d'électricité ne s'étend pas dans les parties latérales et les parties amont qui sont recouvertes par le chevauchement partiel des bords des tuiles. En revanche, la partie aval qui vient recouvrir la partie amont et qui a donc sa face avant libre, de préférence, fait partie de la zone de production d'électricité.

L'EVA est choisi pour résister aux températures élevées auxquelles les éléments photovoltaïques peuvent être soumis du fait de leur fonctionnement sous le soleil. De préférence, un panneau arrière supporte la plaque de silicium encapsulée dans l'EVA.

L'élément photovoltaïque comporte donc du bas/arrière (côté charpente) vers le haut/avant (côté ciel et soleil) : le panneau arrière, le film de matière plastique éthylène-acétate de vinyle inférieur, la plaque à base de silicium, le film de matière plastique éthylène-acétate de vinyle supérieur et la couche de verre trempé.

Deux modèles de plaques à base de silicium sont prévus comme représenté sur les figures 17 avec un modèle dit « classique » et 18 d'un autre modèle.

Il convient de noter que l'on utilise deux termes pour désigner la partie de production de l'électricité au sein de la tuile photovoltaïque : d'une part « élément photovoltaïque » et d'autre part « unité de production photovoltaïque ». Ces deux termes peuvent en fait recouvrir le même objet dans le cas où la tuile comporte une seule plaque à base de silicium de conversion photovoltaïque. Le terme unité de production photovoltaïque est plutôt utilisé dans le cas où la tuile comporte plusieurs plaques à base de silicium de conversion photovoltaïque avec un seul encapsulage commun par EVA et un seul moyen de raccordement électrique 20 qui commun aux plaques à base de silicium, que ce soit avec des liaisons séries et/ou parallèles au sein de la tuile entre les plaques à base de silicium. On prévoit également une tuile comportant plusieurs éléments photovoltaïques en son sein, chaque élément photovoltaïque étant individuellement encapsulé par EVA, la tuile ayant un seul (commun aux éléments photovoltaïques) ou plusieurs (individuel à chaque élément photovoltaïque) moyens de raccordement électrique.

Des liaisons chimiques par collage sont adoptées entre l'élément photovoltaïque et la coque, l'élément photovoltaïque étant fixé dans un logement dans l'épaisseur de la coque, le panneau arrière étant donc au contact de la coque dans ce logement dans le cas d'une coque fermée sur l'arrière (sauf au niveau de l'ouverture 4). En particulier, l'élément photovoltaïque est collé dans son logement contre la coque avec une colle silicone 21 qui assure également l'étanchéité entre l'avant et l'arrière de la tuile au niveau de l'élément photovoltaïque 2, 2a, 2b, 2c. La colle est appliquée sur le pourtour du logement qui présente un rebord de réception de l'élément photovoltaïque.

Dans le cas d'une coque ouverte sur l'arrière (figures 15 et 16) laissant des passages 4' en plus de l'ouverture 4 entre les nervures 34, le panneau arrière est appliqué et, éventuellement collé, contre ces nervures 34.

L'élément photovoltaïque présente l'avantage de ne pas avoir de partie métallique brillante qui risquerait compromettre l'esthétique de la tuile photovoltaïque plate.

Afin d'augmenter la productivité de l'installation des tuiles, il est également proposé en relation avec les figures 5 à 8 une tuile photovoltaïque 1' qui comporte un élément photovoltaïque constitué de trois unités de production photovoltaïque 2a, 2b, 2c juxtaposées latéralement en alignement. Cet élément photovoltaïque peut être monolithique/d'une pièce ou être constitué de trois parties indépendantes reliées électriquement entre elles. Si, de préférence, la coque 3' comporte un seul logement pour ces trois unités (élément photovoltaïque monolithique ou en trois parties indépendantes), on peut prévoir une coque 3' avec trois logements (élément photovoltaïque en trois parties indépendantes). Cette tuile photovoltaïque 1' qui est de grande largeur (mesurée sur un rang) est l'équivalent d'un rang de trois tuiles photovoltaïques 1 du type des figures 1 à 4 pour ce qui concerne son encombrement et ses possibilités d'assemblage à d'autres tuiles photovoltaïques 1 ou 1'. Le moyen de raccordement 20 électrique de cette tuile photovoltaïque 1' est communs aux trois unités de production et elle comporte donc deux câbles électriques de raccordement flexibles, un positif et un négatif et avec des connecteurs de type MC4. On prévoit dans un modèle série de la tuile 1' que les trois unités de production photovoltaïque 2a, 2b, 2c sont reliées en série pour produire trois fois la tension d'une unité de production photovoltaïque 2 simple. On prévoit dans un modèle parallèle de la tuile 1' que les trois unités de production photovoltaïque 2a, 2b, 2c sont reliées en parallèle pour produire au moins trois fois l'intensité d'une unité de production photovoltaïque 2 simple.

Enfin, selon les cas on peut prévoir des dispositifs de protection de l'unité 2 ou des unités 2a, 2b, 2c à type de fusible autoréarmable (e.g. CTP), de diode bypass... On peut également prévoir l'installation d'une diode électroluminescente infrarouge, donc non humainement visible, en surface de la tuile et branchée en parallèle de l'élément photovoltaïque permettant de vérifier le fonctionnement de la tuile avec une caméra ou un appareil photo infrarouge plutôt que de se référer à la température de l'élément photovoltaïque.

On comprend qu'il est également possible de réaliser des tuiles photovoltaïques à deux ou plus de trois unités de production photovoltaïque.

La matière plastique de la coque 3 est de préférence teinté dans une teinte adaptée à des tuiles. De préférence, l'élément photovoltaïque est aussi teinté pareillement. L'intensité et la couleur de la teinte de l'élément photovoltaïque sont choisies pour trouver un compromis entre les pertes de rendement de conversion et l'aspect de la tuile. De préférence, la teinte est effectuée dans le verre trempé.

Les épaisseurs des différentes parties sont les suivantes : verre trempé environ 3,2 mm, le silicium est encapsulé dans un film d'EVA d'épaisseur approximative 0,5 mm par face, le panneau arrière a une épaisseur d'environ 0,35 mm est en matière plastique rigide. L'épaisseur totale de la tuile photovoltaïque hors tenon(s) et éventuelles pattes est de 20 mm.

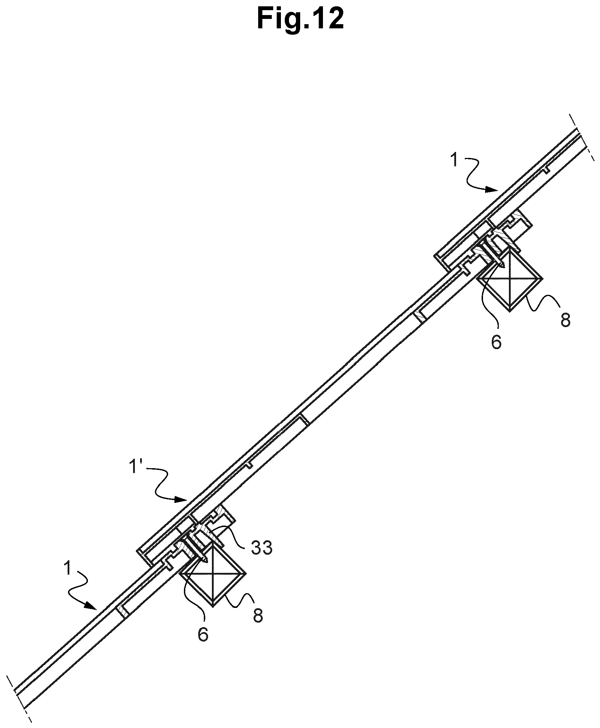

Lors de l'installation de la toiture ou sa rénovation, des liteaux 8 sont fixés à la charpente, parallèlement à la ligne de faîte de la toiture. Les tuiles photovoltaïques sont placées sur les liteaux 8 en commençant vers le bas de la toiture. Les tuiles photovoltaïques sont retenues temporairement sur les liteaux (ou une plaque ondulée décrite plus loin) par leurs tenons 33 jusqu'à ce que le couvreur les fixes par des clous 6 (ou un équivalent de clou dont des vis) passés par les trous de passage 35. Les tenons 33 et les trous de passage 35 sont agencés de manière que les trous de passage 35 soient disposés en regard du liteau 8 lorsque la tuile photovoltaïque est retenue par le tenon 33 sur le liteau 8, les liteaux ayant généralement des dimensions standards. On comprend que l'on réalise les connexions électriques d'une tuile avant de la fixer par les clous afin de pouvoir accéder au moyen de raccordement 20 électrique de la tuile qui est en face arrière. Le résultat est visible figure 12 (les fils électriques ne sont pas représentés pour simplification) où on a mixé les tuiles photovoltaïques 1 et 1' pour signifier leur compatibilité.

L'installation des tuiles 1, 1' se fait donc par le bas de la toiture et les tuiles sont de préférence décalées d'un rang au suivant le long de la ligne de pente de la toiture, comme représenté figures 17 et 18. Dans une variante, les tuiles sont alignées le long de la ligne de pente de la toiture.

Les liteaux qui présentent une certaine épaisseur font que les tuiles photovoltaïques ne sont pas appliquées contre la charpente et la membrane pare-vapeur que l'on installe généralement. Il existe donc un petit espace entre la tuile et la charpente qui autorise, lorsque les liteaux ne sont pas continus, une certaine circulation d'air dans le sens de la pente en plus du sens des rangs.

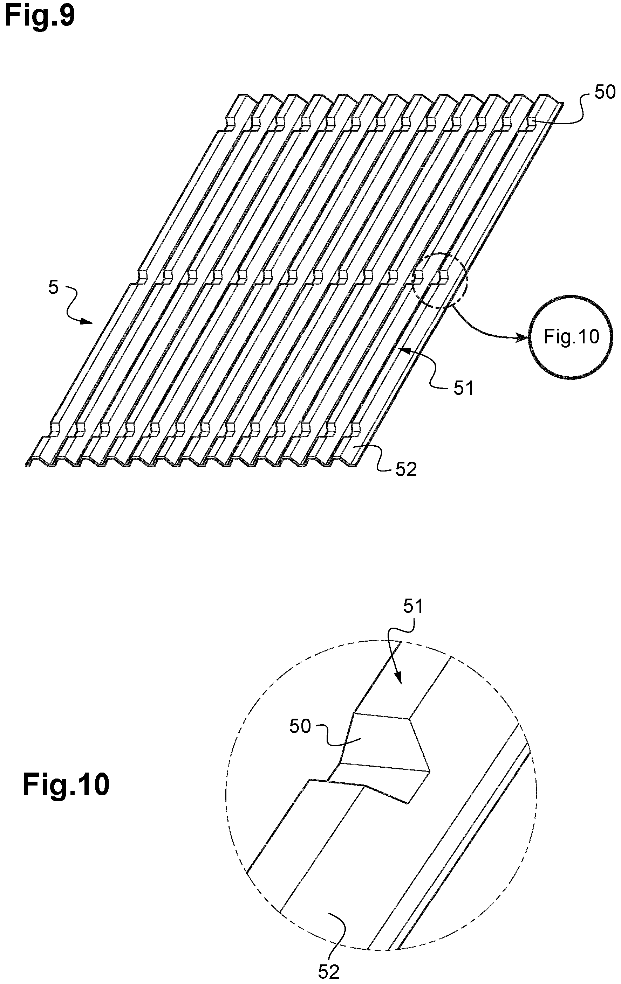

On peut cependant encore augmenter l'efficacité de la circulation d'air dans le sens de la pente en utilisant sur la charpente une plaque ondulée 5 de sous-toiture telle que décrite dans la demande de brevet FR96/13766 et sur laquelle on installe les tuiles photovoltaïques. Cette plaque ondulée 5 représentée sur les figures 9 à 11 présente en outre l'avantage de ne pas nécessiter l'utilisation de liteau car elle permet l'accrochage des tuiles photovoltaïques 1, 1' plates. En effet, cette plaque ondulée 5 présente des ondulations 52 et comporte, sur une de ses surfaces, des zones en creux 50 dans la partie convexe 51 des ondulations. Ce sont ces zones en creux 50 qui permettent l'accrochage des tuiles photovoltaïques plates par leurs tenons 33 directement sur la plaque ondulée 5 de sous-toiture.

Cette plaque ondulée 5 présente des ondes régulières profondes sensiblement sinusoïdales, ce qui accroît sa résistance au fléchissement et la solidité des toitures dans lesquelles il est utilisé, et qui permettent un parfait drainage.

Dans des variantes la plaque ondulée peut présenter une alternance d'ondes et de zones plates et/ou les ondulations 52 peuvent être différentes, par exemple de type grec ou en V.

Les zones en creux 50 sont avantageusement réparties selon des droites sensiblement perpendiculaires aux ondulations 52 afin de définir des rangs. La profondeur et les localisations, notamment distances, des zones en creux 50 sont prévues pour pouvoir recevoir et retenir les tenons 33 des tuiles photovoltaïques. Avantageusement, le sommet de la partie convexe 51 des ondulations est légèrement aplati et peut présenter un état de surface rugueux afin d'éviter ainsi tout risque de déformation de la sous-toiture et de glissement des tuiles.

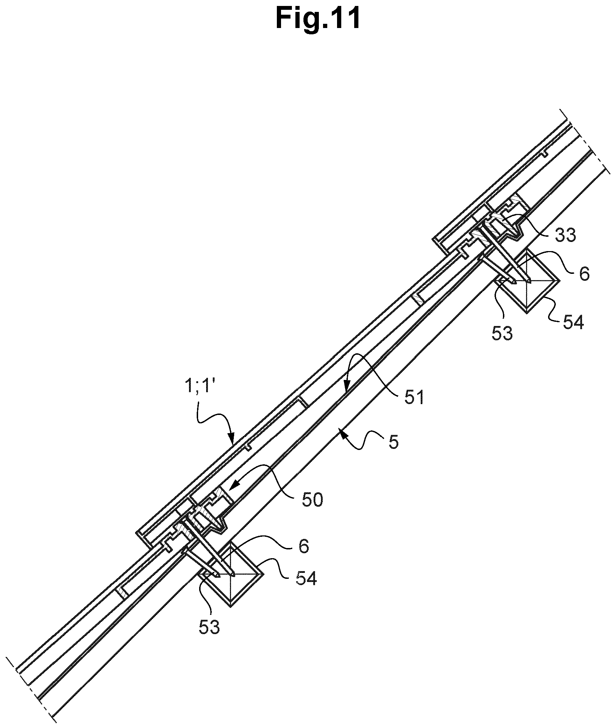

Lors de l'installation de la toiture ou sa rénovation, de telles plaques ondulées 5 sont fixées par des clous 53 ou équivalents sur la charpente 7 de façon qu'elles se recouvrent partiellement et que les ondulations 52 soient placées selon la pente du toit. Tout moyen de fixation approprié des plaques ondulées, placé de préférence sur le sommet des ondulations, peut être utilisé. Les tuiles photovoltaïques 1, 1' sont ensuite directement posées sur la sous-toiture formée par les plaques ondulées 5. On comprend qu'en l'absence de liteau, les tuiles photovoltaïques peuvent être fixées par l'intermédiaire de leurs trous de passage 35 directement sur la plaque ondulée 5 sous-jacente. Dans une variante représentée figure 11, toujours en l'absence de liteau, les tuiles photovoltaïques sont fixées à la charpente 7 par des clous 6 par l'intermédiaire de leurs trous de passage 35. Dans ce dernier cas et que la charpente est dans le sens de la pente du toit, il est avantageux de mettre en œuvre des tuiles photovoltaïques 1' qui comportent chacune plusieurs unités de production photovoltaïque et qui sont donc de grande largeur afin d'avoir au moins deux des trous de passage 35 d'une tuile photovoltaïque 1' en regard de la charpente.

Dans une variante d'installation, au lieu de poser directement les tuiles 1, 1' sur la plaque ondulée avec leurs tenons 33 placés dans les zones en creux 50, on installe d'abord des liteaux dans les zones en creux 50 puis les tuiles 1, 1' sont positionnées sur les liteaux, retenues par leurs tenons 33 aux liteaux. Cette dernière solution revient à un montage sur liteau mais une plaque ondulée de sous-toiture ayant été installée préalablement. Le matériau des plaques ondulées peut par exemple être réalisé en une matière cellulosique imprégnée de bitume, en une matière plastique, du type PVC ou encore en acier. Le profil de la plaque ondulée permet une bonne ventilation de la toiture, la vapeur d'eau pouvant facilement circuler et facilite le passage des câbles électriques d'un rang à l'autre le long de la pente. A noter qu'on peut prévoir des zones en retrait supplémentaires du type des zones en creux, ces zones en retrait étant destinées au passage de câbles électriques le long d'un rang, entre les ondulations.

Lors de l'installation des tuiles, en outre de la fixation aux liteaux on peut prévoir des liaisons mécaniques, notamment par clipsage, et/ou chimiques par collage entre les tuiles d'un rang et/ou entre les rangs, le collage pouvant correspondre à l'application d'un joint pâteux polymérisable entre les tuiles.

On comprend que la tuile de l'invention peut être fabriquée de nombreuses manières. Par exemple on prévoit de rajouter en surface de la tuile un film coloré de matière plastique, le film pouvant en outre comprendre des motifs visuels destinés à donner une impression visuelle particulière.

Enfin, on prévoit la réalisation de tuiles fictives ayant une forme et un aspect similaire aux tuiles photovoltaïques pour installation dans des zones où l'on ne souhaite pas ou on ne peut pas produire de l'électricité (par exemple du fait de la présence d'une cheminée créant une zone d'ombre). On peut ainsi réaliser une toiture optimisée où les tuiles photovoltaïques sont placées seulement aux endroits favorables et dont l'aspect est homogène.

## Revendications

1. Tuile photovoltaïque (1, 1') plate destinée à former une couverture d'une toiture en pente par juxtaposition en recouvrement partiel bord à bord d'un ensemble de tuiles (1, 1'), la tuile comportant une coque (3) et au moins un élément photovoltaïque (2) plan de production d'électricité, la coque (3) étant rigide et en matière plastique, l'élément photovoltaïque (2) étant fixé dans un logement de l'épaisseur de la coque (3), la tuile (1, 1') ayant deux faces opposées et quatre bords :
- une face avant (14) et une face arrière (15), la face avant (14) étant destinée à recevoir un rayonnement solaire et étant plane,
- un bord amont (12) et un bord aval (13) opposés et parallèles entre eux, le bord amont (12) étant destiné à être installé plus haut que le bord aval (13) dans la couverture de la toiture en pente, une partie amont (32) située le long du bord amont (12) de la tuile étant destinée à être recouverte par une partie aval située le long du bord aval (13) d'au moins une autre tuile de la couverture,
- un bord latéral droit (10) et un bord latéral gauche (11) opposés et parallèles entre eux, deux parties latérales le long des deux bords latéraux droit (10) et gauche (11) étant destinées à respectivement recouvrir et être recouvertes par des parties latérales de bords latéraux gauche (11) et droit (10) respectivement de deux autres tuiles adjacentes d'un même rang de tuiles de la couverture,
les parties latérales venant en recouvrement des tuiles ainsi que la partie amont (32) et la partie aval venant en recouvrement des tuiles étant configurées afin d'assurer une étanchéité au moins à l'eau liquide s'écoulant sur la toiture,
l'élément photovoltaïque (2) formant une zone de production d'électricité, la tuile (1, 1') étant configurée afin que la zone de production d'électricité s'étende sur la tuile en dehors des parties de la tuile destinées à être recouvertes, la tuile comportant en outre un moyen de raccordement (20) électrique destiné à exporter l'électricité produite par l'élément photovoltaïque (2),
la face arrière (15) comportant vers le bord amont (12) au moins un tenon (33) débordant vers l'arrière du gabarit général plan de la face arrière (15), ledit au moins un tenon (33) étant destiné à retenir la tuile (1, 1') sur un dispositif de retenue (8, 5, 50), notamment un liteau (8), et
d'une part, dans la zone de production d'électricité, la tuile (1, 1') comporte dans son épaisseur, de la face arrière (15) vers la face avant (14) :
- une partie de coque (2),
- un panneau arrière,
- un film inférieur d'Ethylène Vinyle Acétate,
- au moins une plaque à base de silicium de conversion photovoltaïque,
- un film supérieur d'Ethylène Vinyle Acétate, et
- une couche transparente constituée de verre trempé, et
d'autre part, en dehors de la zone de production d'électricité, la tuile (1, 1') comporte dans son épaisseur la matière plastique de la coque (2),
la plaque à base de silicium de l'élément photovoltaïque (2) étant encapsulée d'une manière étanche dans le film d'Ethylène Vinyle Acétate, le moyen de raccordement (20) électrique traversant le film,
la partie amont de la tuile destinée à être recouverte comportant en outre sur sa face avant au moins un orifice et la partie aval de la tuile comportant en outre sur sa face arrière au moins une patte en saillie vers l'arrière, ledit au moins un orifice ayant un fond, lesdits au moins un orifice et au moins une patte étant de formes complémentaires afin que lorsque la partie amont de la tuile est recouverte par la partie aval d'une autre tuile, la patte de l'autre tuile s'engage dans l'orifice de la tuile, et
le bord latéral gauche (11) de la tuile comporte vers l'aval un décrochement (11d) d'environ 1 mm configuré pour permettre l'installation d'un crampon ou crochet (9) de retenue de tuile destiné à être fixé sur une charpente ou un liteau (8).

2. Tuile photovoltaïque (1, 1') plate selon la revendication 1, **caractérisée en ce que** le logement dans l'épaisseur de la coque (2) comporte un fond plat et **en ce que** le fond plat du logement comporte une ouverture de passage du moyen de raccordement électrique (20) disposé côté face arrière de l'élément photovoltaïque (2).

3. Tuile photovoltaïque (1, 1') plate selon l'une quelconque des revendications 1 et 2, **caractérisée en ce que** la partie amont (32) comporte des trous de passage destinés au passage d'éléments de fixation pour fixer la tuile à la toiture, les éléments de fixation étant notamment des pointes, clous ou vis.

4. Tuile photovoltaïque (1, 1') plate selon l'une quelconque des revendications 1 à 3, **caractérisée en ce que** ledit au moins un orifice et ladite au moins une patte ont des formes complémentaires comportant des moyens de verrouillage entre elles.

5. Tuile photovoltaïque (1, 1') plate selon l'une quelconque des revendications 1 à 4, **caractérisée en ce qu'**elle est d'épaisseur sensiblement uniforme, ladite épaisseur étant comprise entre 25 mm et 15 mm et étant de préférence d'environ 20 mm.

6. Tuile photovoltaïque (1, 1') plate selon l'une quelconque des revendications 1 à 5, **caractérisée en ce que** le moyen de raccordement électrique (20) est constitué de deux câbles électriques flexibles sortants de la face arrière de la tuile.

7. Tuile photovoltaïque (1, 1') plate selon l'une quelconque des revendications 1 à 6, **caractérisée en ce qu'**elle comporte une gorge latérale (31) et une contre-gorge latérale (38) ou qu'elle comporte deux gorges latérales (31, 31') et deux contre-gorges latérales (38, 38').

8. Tuile photovoltaïque (1, 1') plate selon la revendication 4, **caractérisée en ce que** les moyens de verrouillage dudit au moins un orifice et de ladite au moins une patte sont à clipsage.

9. Tuile photovoltaïque (1, 1') plate selon l'une quelconque des revendications 1 à 8, **caractérisée en ce que** le moyen de raccordement électrique comporte deux broches étendues vers l'arrière et compatibles avec un liteau ayant deux trous de réception de connexion pour lesdites broches, les liteaux formant des bus de circulation de courant.

10. Tuile photovoltaïque plate selon l'une quelconque des revendications 1 à 9, **caractérisée en ce qu'**elle comporte dans sa coque plusieurs éléments photovoltaïques, chaque élément photovoltaïque étant individuellement encapsulé par EVA.

11. Procédé de pose de tuiles photovoltaïques (1, 1'), **caractérisé en ce que** sur une toiture en pente comportant des dispositifs de retenue (5, 50) alignés en plusieurs rangs parallèlement à une ligne de faîte de la toiture, les dispositifs de retenue étant choisis parmi les liteaux (8) et les plaques ondulées (5) présentant des zones en creux (50) dans la partie convexe (51) de leurs ondulations, on pose un ensemble de tuiles photovoltaïques (1, 1') plates selon l'une quelconque des revendications 1 à 10 en commençant par le bas de la toiture, chaque tuile (1, 1') étant d'abord retenue par son/ses tenons sur le dispositif de retenue (5, 50) correspondant avant d'être fixée par des éléments de fixation au liteau (8) correspondant ou à un élément de charpente de la toiture en traversant la plaque ondulée (5) correspondante, et avant l'installation de la tuile du rang supérieur, les éléments de fixation étant passés par les trous de passage de la partie amont (32) de la tuile (1, 1') et dans lequel chaque tuile comporte un bord latéral droit (10) et un bord latéral gauche (11) et le bord latéral gauche (11) de la tuile comporte vers l'aval un décrochement (11d) d'environ 1 mm configuré pour permettre l'installation d'un crampon ou crochet (9) de retenue de tuile destiné à être vissé ou cloué sur une charpente ou un liteau (8), ledit crampon ou crochet (9) venant s'accrocher sur la bordure de la tuile, côté latéral gauche.

12. Couverture de toiture comportant une juxtaposition d'un ensemble de tuiles photovoltaïques (1, 1') plates selon l'une quelconque des revendications 1 à 10, la couverture comportant des liteaux et/ou des plaques ondulées (5) présentant des zones en creux (50) dans la partie convexe (51) de leurs ondulations.

## Patentansprüche

1. Flacher Photovoltaik-Ziegel (1, 1'), dazu bestimmt, durch Aneinanderlegen einer Gesamtheit von Ziegeln (1, 1') mit teilweiser Überdeckung am Rand eine Abdeckung eines schrägen Dachs zu bilden, wobei der Ziegel eine Schale (3) und mindestens ein ebenes Photovoltaik-Element (2) zum Produzieren von Elektrizität aufweist, wobei die Schale (3) steif und aus Plastikmaterial ist, wobei das Photovoltaik-Element (2) in einem Gehäuse von der Dicke der Schale (3) befestigt ist, wobei der Ziegel (1, 1') zwei voneinander abgewandte Seiten und vier Ränder hat:
- eine Vorderseite (14) und eine Rückseite (15), wobei die Vorderseite (14) dazu bestimmt ist, eine Sonneneinstrahlung aufzunehmen, und flach ist,
- einen nach oben gerichteten Rand (12) und einen nach unten gerichteten Rand (13), die voneinander abgewandt und parallel zueinander sind, wobei der nach oben gerichtete Rand (12) dazu bestimmt ist, in der Abdeckung des schrägen Dachs höher als der nach unten gerichtete Rand (13) installiert zu werden, wobei ein entlang des nach oben gerichteten Rands (12) gelegener, nach oben gerichteter Teil (32) des Ziegels dazu bestimmt ist, von einem entlang des nach unten gerichteten Rands (13) gelegenen, nach unten gerichteten Teil mindestens eines anderen Ziegels der Abdeckung überdeckt zu sein,
- einen rechten Seitenrand (10) und einen linken Seitenrand (11), die voneinander abgewandt und zueinander parallel sind, wobei zwei seitliche Teile entlang des linken (11) und des rechten (10) Seitenrands dazu bestimmt sind, von seitlichen Teilen des linken (11) und des rechten (10) Seitenrands zweier daneben liegender anderer Ziegel ein und derselben Reihe Ziegel der Abdeckung überdeckt zu werden beziehungsweise selbige zu überdecken,
wobei die die Ziegel überdeckenden seitlichen Teile und der nach oben gerichtete Teil (32) und der nach unten gerichtete Teil, die die Ziegel überdecken, so ausgebildet sind, daß sie mindestens hinsichtlich auf dem Dach abfließenden flüssigen Wassers eine Dichtigkeit sicherstellen,
wobei das Photovoltaik-Element (2) eine Zone der Produktion von Elektrizität bildet, wobei der Ziegel (1, 1') so ausgebildet ist, daß sich die Zone der Produktion von Elektrizität über den Ziegel mit Ausnahme der Teile erstreckt, die dazu bestimmt sind, überdeckt zu werden, wobei der Ziegel außerdem ein elektrisches Anschlußmittel (20) aufweist, das dazu bestimmt ist, die vom Photovoltaik-Element (2) erzeugte Elektrizität abzugeben,
wobei die Rückseite (15) zum nach oben gerichteten Rand (12) hin mindestens einen Zapfen (33) aufweist, der gegenüber der im Wesentlichen ebenen Form nach hinten übersteht, wobei der mindestens eine Zapfen (33) dazu bestimmt ist, den Ziegel (1,1') auf einer Haltevorrichtung (8, 5, 50), insbesondere einer Latte (8), festzuhalten, und
einerseits der Ziegel (1, 1') in der Zone der Produktion von Elektrizität in seiner Dicke, von der Rückseite (15) zur Vorderseite (14):
- einen Schalenteil (2),
- eine rückwärtige Platte,
- einen unteren Film aus Ethylen-Vinylazetat,
- mindestens eine Platte mit photovoltaisch umwandelbarem Silizium als Grundmaterial,
- einen oberen Film aus Ethylen-Vinylazetat und
- eine durchsichtige Schicht aus getempertem Glas aufweist und
andererseits der Ziegel (1, 1') außerhalb der Zone der Produktion von Elektrizität in seiner Dicke das Plastikmaterial der Schale (2) aufweist,
wobei die Platte mit photovoltaisch umwandelbarem Silizium als Grundmaterial in dichter Weise in dem Film aus Ethylen-Vinylazetat eingekapselt ist und das Anschlußmittel (20) den Film durchquert,
wobei der nach oben gerichtete Teil des Ziegels, der dazu bestimmt ist, überdeckt zu werden, auf seiner Vorderseite außerdem mindestens ein Loch aufweist und der nach unten gerichtete Teil des Ziegels auf seiner Rückseite außerdem mindestens einen nach hinten vorstehenden Zapfen aufweist, wobei das mindestens eine Loch einen Boden aufweist, wobei das mindestens eine Loch und der mindestens eine Zapfen komplementäre Formen aufweisen, damit dann, wenn der nach oben gerichtete Teil des Ziegels vom nach unten gerichteten Teil eines anderen Ziegels überdeckt ist, der Zapfen des anderen Ziegels in das Loch des Ziegels eingreift, und
der linke Seitenrand (11) des Ziegels nach unten hin einen Absatz (11d) von etwa 1 mm aufweist, der so ausgelegt ist, daß ein Dorn oder Haken (9) zum Festhalten des Ziegels, der auf einem Dachstuhl oder einer Latte befestigt werden soll, angebracht werden kann.

2. Flacher Photovoltaik-Ziegel (1, 1') gemäß Anspruch 1, **dadurch gekennzeichnet, daß** das Gehäuse in der Dicke der Schale (2) einen flachen Boden aufweist und daß der flache Boden des Gehäuses eine Öffnung für den Durchgang des an der Rückseite des Photovoltaik-Elements (2) angeordneten elektrischen Anschlußmittels (20) aufweist.

3. Flacher Photovoltaik-Ziegel (1, 1') gemäß einem der Ansprüche 1 und 2, **dadurch gekennzeichnet, daß** der nach oben gerichtete Teil (32) Durchgangslöcher aufweist, die zum Hindurchführen von Befestigungselementen zum Befestigen des Ziegels am Dachstuhl bestimmt sind, wobei die Befestigungselemente insbesondere Stifte, Nägel oder Schrauben sind.

4. Flacher Photovoltaik-Ziegel (1, 1') gemäß einem der Ansprüche 1 bis 3, **dadurch gekennzeichnet, daß** das mindestens eine Loch und der mindestens eine Zapfen komplementäre Formen mit Mitteln zum miteinander Verriegeln aufweisen.

5. Flacher Photovoltaik-Ziegel (1, 1') gemäß einem der Ansprüche 1 bis 4, **dadurch gekennzeichnet, daß** er eine im Wesentlichen gleichmäßige Dicke hat, wobei die Dicke zwischen 25 mm und 15 mm beträgt und vorzugsweise ungefähr 20 mm ist.

6. Flacher Photovoltaik-Ziegel (1, 1') gemäß einem der Ansprüche 1 bis 5, **dadurch gekennzeichnet, daß** das elektrische Anschlußmittel (20) aus zwei aus der Rückseite des Ziegels herauskommenden flexiblen elektrischen Kabeln besteht.

7. Flacher Photovoltaik-Ziegel (1, 1') gemäß einem der Ansprüche 1 bis 6, **dadurch gekennzeichnet, daß** er eine seitliche Kehle (31) und eine seitliche Gegenkehle (38) aufweist oder daß er zwei seitliche Kehlen (31, 31') und zwei seitliche Gegenkehlen (38, 38') aufweist.

8. Flacher Photovoltaik-Ziegel (1, 1') gemäß Anspruch 4, **dadurch gekennzeichnet, daß** die Verriegelungsmittel des mindestens einen Lochs und des mindestens einen Zapfens Mittel zum Einrasten sind.

9. Flacher Photovoltaik-Ziegel (1, 1') gemäß einem der Ansprüche 1 bis 8, **dadurch gekennzeichnet, daß** das elektrische Anschlußmittel zwei Stifte aufweist, die sich nach hinten erstrecken und mit einer Dachlatte kompatibel sind, die zwei Verbindungsaufnahmelöcher für die besagten Stifte aufweist, wobei die Dachlatten Stromflußwege bilden.

10. Flacher Photovoltaik-Ziegel (1, 1') gemäß einem der Ansprüche 1 bis 9, **dadurch gekennzeichnet, daß** er in seiner Schale mehrere Photovoltaik-Elemente aufweist, wobei jedes Photovoltaik-Element durch EVA individuell eingekapselt ist.

11. Verfahren zum Verlegen eines flachen Photovoltaik-Ziegels (1, 1'), **dadurch gekennzeichnet, daß** man auf einem schrägen Dach mit in mehreren, zu einer Dachfirstlinie parallelen Reihen ausgerichteten Halteelementen (5, 50), wobei die Halteelemente unter den Dachlatten (8) und den gewellten Platten (5) mit hohlen Zonen (50) im konvexen Teil (51) von deren Wellungen ausgewählt werden, eine Gesamtheit von flachen Photovoltaik-Ziegeln (1, 1') gemäß einem der Ansprüche 1 bis 10, unten am Dach anfangend verlegt, wobei jeder Ziegel (1, 1') zunächst durch seinen/seine Zapfen auf der entsprechenden Haltevorrichtung (5, 50) festgehalten wird, bevor er durch Befestigungselemente an der entsprechenden Dachlatte (8) oder an einem Dachstuhlelement des Dachs befestigt wird und dabei die entsprechende gewellte Platte (5) durchquert, und, vor der Installation des Ziegels der darüberliegenden Reihe, die Befestigungselemente durch die Durchgangslöcher des nach oben gerichteten Teils (32) des Ziegels (1, 1') geführt werden, und bei dem jeder Ziegel einen rechten Seitenrand (10) und einen linken Seitenrand (11) aufweist und der linke Seitenrand (11) des Ziegels nach unten hin einen Absatz (11d) von etwa 1 mm aufweist, der so ausgelegt ist, daß ein Dorn oder Haken (9) zum Festhalten des Ziegels, der auf einem Dachstuhl oder einer Latte (8) geschraubt oder genagelt werden soll, angebracht werden kann, wobei der Dorn oder Haken (9) am Rand des Ziegels an der linken Seite einhakt.

12. Dachabdeckung mit einer Nebeneinanderanordnung einer Gesamtheit von flachen Photovoltaik-Ziegeln (1, 1') gemäß einem der Ansprüche 1 bis 10, wobei die Dachabdeckung Dachlatten und/oder gewellte Platten (5) aufweist, die im konvexen Teil (51) ihrer Wellungen hohle Zonen (50) aufweisen.

## Claims

1. A flat photovoltaic tile (1, 1') intended to form a covering for a pitched roof by juxtaposing a set of tiles (1, 1') in partial edge-to-edge overlap, the tile including a shell (3) and a flat photovoltaic power generation element (2), the shell (3) being rigid and made of plastic material, the photovoltaic element (2) being fastened in a housing formed in the shell (3) thickness, the tile (1, 1') having two opposite faces and four edges:
- a front face (14) and a rear face (15), the front face (14) being intended to receive a solar radiation and being planar,
- an upstream edge (12) and a downstream edge (13), opposite and parallel to each other, the upstream edge (12) being intended to be installed higher than the downstream edge (13) in the pitched roof covering, an upstream part (32) located along the upstream edge (12) of the tile being intended to be overlapped by a downstream part located along the downstream edge (13) of at least another tile of the covering,
- a right lateral edge (10) and a left lateral edge (11), opposite and parallel to each other, two lateral parts along the two right (10) and left (11) lateral edges being intended to respectively overlap and be overlapped by lateral parts of the left (11) and right (10) lateral edges, respectively, of two other adjacent tiles of a same row of tiles of the covering,
the overlapping lateral parts of the tiles as well as the overlapping upstream part (32) and downstream part of the tiles being configured in such a way as to ensure watertightness to at least the liquid water flowing on the roof,
the photovoltaic element (2) forming a power generation area, the tile (1, 1') being configured in such a way that the power generation area extends over the tile outside of the tile parts that are intended to be overlapped, the tile further including an electrical connection means (20) for exporting the power generated by the photovoltaic element (2),
the rear face (15) including, towards the upstream edge (12), at least one tenon (33) protruding rearward from the flat general extent of the rear face (15), said at least one tenon (33) being intended to hold the tile (1, 1') on a holding device (8, 5, 50), in particular a batten (8), and
on the one hand, in the power generation area, the tile (1, 1') includes, in its thickness, from the rear face (15) towards the front face (14):
- a shell part (2),
- a rear panel,
- a lower Ethylene Vinyl Acetate film,
- at least one silicon-based photovoltaic conversion plate,
- an upper Ethylene Vinyl Acetate film, and
- a transparent layer consisted of tempered glass, and
on the other hand, outside of the power generation area, the tile (1, 1') includes, in its thickness, the plastic material of the shell (2),
the silicon-based plate of the photovoltaic element (2) being hermetically encapsulated in the Ethylene Vinyl Acetate film, the electrical connection means (20) passing through the film,
the tile upstream part, intended to be overlapped, further including, on its front face, at least one hole, and the tile downstream part further including, on its rear face, at least one tab protruding rearward, said at least one hole having a bottom, said at least one hole and at least one tab being of complementary shapes in such a way that, when the tile upstream part is overlapped by the downstream part of another tile, the tab of the other tile is engaged into the tile hole, and the left lateral edge (11) of the tile comprises, downstream, a cut-out (11d) of about 1 mm configured to allow the installation of a tile holding stud or hook (9) intended to be fixed on a roof frame or a batten (8).

2. The flat photovoltaic tile (1, 1') according to claim 1, **characterized in that** the housing formed in the thickness of the shell (2) has a flat bottom and **in that** the flat bottom of the housing includes a through-hole for the passage of the electrical connection means (20) arranged on the rear face side of the photovoltaic element (2).

3. The flat photovoltaic tile (1, 1') according to any one of claims 1 and 2, **characterized in that** the upstream part (32) includes through-holes for the passage of fasteners to fasten the tile to the roof, the fasteners being in particular spikes, nails or screws.

4. The flat photovoltaic tile (1, 1') according to any one of claims 1 to 3, **characterized in that** said at least one hole and said at least tab being of complementary shapes including interlocking means.

5. The flat photovoltaic tile (1, 1') according to any one of claims 1 to 4, **characterized in that** it has a substantially uniform thickness, said thickness being between 25 mm and 15 mm and being preferably about 20 mm.

6. The flat photovoltaic tile (1, 1') according to any one of claims 1 to 5, **characterized in that** the electrical connection means (20) is consisted of two flexible electrical cables exiting from the tile rear face.

7. The flat photovoltaic tile (1, 1') according to any one of claims 1 to 6, **characterized in that** it includes a lateral groove (31) and a lateral counter-groove (38) or **in that** it includes two lateral grooves (31, 31') and two lateral counter-grooves (38, 38').

8. The flat photovoltaic tile (1, 1') according to 4, **characterized in that** the interlocking means of said at least one hole and said at least one tab are of the clipping type.

9. The flat photovoltaic tile (1, 1') according to any one of claims 1 to 8, **characterized in that** the electrical connection means includes two rearward pins compatible with a batten having two connection receiving holes for said pins, the battens forming current flow buses.

10. The flat photovoltaic tile (1, 1') according to any one of claims 1 to 9, **characterized in that** it comprises in its shell a number of photovoltaic elements, each photovoltaic element being individually encapsulated with EVA.

11. A method for installing photovoltaic tiles (1, 1'), **characterized in that**, on a pitched roof including holding devices (5, 50) aligned in several rows, parallel to a ridge line of the roof, the holding devices being chosen among the battens (8) and the corrugated sheets (5) having recessed areas (50) in the convex part (51) of their corrugations, a set of flat photovoltaic tiles (1, 1') according to any one of claims 1 to 10 is installed, starting from the bottom of the roof, each tile (1, 1') being first held by its tenon(s) on the corresponding holding device (5, 50) before being fastened by fasteners to the corresponding batten (8) or to an element of the roof frame by passing through the corresponding corrugated sheet (5), and before installation of the upper row tile, the fasteners being passed through the through-holes of the upstream part (32) of the tile (1, 1'), and wherein each tile comprises a right lateral edge (10) and a left lateral edge (11) and the left lateral edge (11) of the tile comprises, downstream, a cut-out (11d) of about 1 mm configured to allow the installation of a tile holding stud or hook (9) intended to be screwed or nailed in a roof frame or a batten (8), said stud or hook (9) being hooked to the tile edge, on the left lateral side.

12. A roof covering including a juxtaposition of a set of flat photovoltaic tiles (1, 1') according to any one of claims 1 to 10, the covering including battens and/or corrugated sheets (5) having recessed areas (50) in the convex part (51) of their corrugations.
